# EUROPEAN PATENT SPECIFICATION

(11) **EP 2 854 518 B1**
(45) Date of publication and mention of the grant of the patent: **21.11.2018**
(21) Application number: 12756012.6
(22) Date of filing: 29.05.2012
(51) Int. Cl.: A01K 27/00

(54) **DOG HARNESS**
HUNDEGESCHIRR
HARNAIS POUR CHIEN

(43) Date of publication of application: 08.04.2015
(73) Proprietor: Woodward, Marcus, Podmore, Staffordshire ST21 6QG (GB); Richardson, Steven, Windsor, Ontario N9J 3S6 (CA); Wilson, Danny, Kanahooka New South Wales 2530 (AU)
(72) Inventor: Woodward, Marcus, Podmore, Staffordshire ST21 6QG (GB); Richardson, Steven, Windsor, Ontario N9J 3S6 (CA); Wilson, Danny, Kanahooka New South Wales 2530 (AU)
(74) Representative: Tolfree, Adam Joseph Benjamin
(86) International application number: PCT/GB2012/051209
(87) International publication number: WO 2013/178966

(56) References cited:
- EP-A1- 1 033 075
- WO-A1-99/51088
- WO-A1-2005/117572
- US-A- 6 101 979
- US-A1- 2006 278 179
- US-B1- 8 171 892

## Description

### FIELD OF THE INVENTION

This invention pertains to dog harnesses, more particularly to dog harnesses that allow an effective method of training the dog and when necessary allowing control of the dog. Such harnesses are known from for instance WO2005/117572A and WO2006/278179.

### BACKGROUND OF THE INVENTION

Dog training and dog handling has many facets and one of the most important parts of dog training is the equipment created to teach the dog to walk. There are collars, head restraints and harnesses available in the market place today.

Collars have been around virtually since man and dog got together, and then came harnesses which were used to get dogs to pull sleds originally. Head restraint collars came into being in the latter part of the last century.

Harnesses have always traditionally been a device that fits around the dog's body encompassing the chest, with an anchor point where the leash attaches to, for the handler to hold the dog.

Harnesses on the market today do not 'communicate' anything to the dog via sound, nor do they have any chain in connection with their design, they are not designed to 'communicate' in any of their applications, they are designed to 'restrain' the dog and to stop the dog's forward motion.

All types of dog collars are not generally well accepted by the mainstream public, dog trainers or vets. Check chains that were used many years ago to communicate to dogs are now almost non-existent and not all popular.

Harnesses and head collars have taken the 'check chains' place. However there is still a need for a piece of training equipment that can be used to communicate to the dog in a humane and acceptable manner.

With the popularity of harnesses with dog owners and vets, as well the greater acceptance of the harnesses in today's world of dog training, a harness that communicates and one that is kind and gentle is going to be well received in the market place.

Our harness is designed to be used on domestic dogs and as a training tool to train dogs to walk properly at heel. The harnesses design is such that the chain tightens through the round metal rings at either end when the dog pulls forward, and can be used by left and right handed handlers. The leash can be connected to either metal ring and the chain will slide and tighten in the handler's direction.

As the leash is pulled taught, the chain tightens across the dog's chest towards the side that the handler is standing on and as it does it slides over the steel ring, making an 'audible' metallic sound that the dog hears. This sound is heard by the dog just before it reaches the extreme portion of the harness-it's a pre-warning-early warning signal, that lets the dog know that the extreme end of the harness is about to be breached and therefore it teaches the dog to stop pulling before it gets to that extreme point of the harness.

The harness allows the trainer or handler to then also communicate with 'a verbal, audible sound' at the precise moment that the chain makes its audible metallic sound which is 'based on moderns day philosophies of operant conditioning, tightening and releases around the dog's chest area.

### SUMMARY OF THE INVENTION

In its broadest form, the present invention provides a harness for placement around the girth of an animal according to claim 1.

Preferably, the girth of the animal is a chest of an animal.

According to the invention, the movement of the elongate linker through the apertures provides a noise detectable by the animal.

According to the invention, the noise assists in the training of the animal and the elongate linker is a chain.

In yet another preferred form, the linker is formed from a linker material that optimises the noise detectable by the animal to achieve an optimal training response in the animal.

Preferably, the linker material is a chain having a gauge that is increased or decreased to optimise the noise detectable by the animal to achieve the optimal training response.

In yet another preferred form, the restraint further includes a placement device to facilitate location and/or adjustment of the restraint about the girth of the animal.

Preferably, the restraint includes belt length adjustment devices on each chest strap at the belt ends, the belt being doubled at the belt end for passing through the belt length-adjustment device, thereby lengthening or shortening the girth of the restraint.

In a preferred form, the stopper of the restraint is suitable for engagement with a tether.

In another preferred form, the stopper of the restraint is permanently attached to a tether.

In yet a further preferred form, the aperture of the restraint is in the form of a ring, such as an 0-ring or a D-ring.

Preferably, the stoppers of the restraint are substantially annular.

### DOG HARNESS

### BRIEF DESCRIPTION OF THE DRAWINGS

Figure 1 shows the harness with an elongate linker with leash connectors/stoppers on both ends of the linker.
Figure 2 shows the harness with an elongate linker with one common leash connector with both ends of the linker attached to the same connector forming a loop.
Figure 3 shows a side view of the harness on the torso of a dog.
Figure 4 shows a side view of the harness on the torso of a dog with a leash connected to one of two side connectors for close quarter walking or off leash training.

### DETAILED DESCRIPTION OF THE INVENTION

Various types of ring connectors may be used. A circular ring connector can accommodate a number of straps, which are each free to rotate around the circle. A "rectangular connector" is a ring made of a durable material defining a rectangle, to which at least three straps may be attached. A rectangular connector does not permit any change of direction of the straps passing through it and is selected when a fixed angle of attachment is desirable. If two straps are to be attached through a rectangular connector, a narrow rectangular connector is chosen. If three or four straps are to be attached through a rectangular connector, the connector approaches a square. If three straps are to be connected, a triangular connector may be chosen. In describing this invention the "first connector" is the circular ring connector to which the shoulder, torso and chest straps are attached at each side of the harness.

A half-ring or "D-ring" connector permits rotation on the curved half of the D-ring and does not permit rotation on the flat half of the D-ring. A D-ring is preferred as the "second connector", with the flat side securely affixed to the end of each chest strap forming the apertures for the elongate linker. A circular ring connector is the preferred connector for each end of the linker providing a leash connector on one side and a stopper on the other.

In another embodiment, a single circular ring connector can be used to connect to both ends of the linker providing a leash connection point and taking away the need for a stopper as the elongate linker becomes a continuous loop.

In both embodiments as the leash is pulled taught, the chain tightens across the dog's chest towards the side that the handler is standing on and as it does it slides over the steel ring, making an 'audible' metallic sound that the dog hears. This sound is heard by the dog just before it reaches the extreme portion of the harness-it's a pre-warning-early warning signal, that lets the dog know that the extreme end of the harness is about to be breached and therefore it teaches the dog to stop pulling before it gets to that extreme point of the harness. If the extreme end of the harness is reached the dog will turn in the direction of the pull because the elongate linker will move the center of balance to the right or left leaving the dog facing the handler allowing the handler to refocus the dog and start training again.

An "adjustment.slide" is a narrow rectangular connector with a center bar. In this invention, an adjustment slide is used on upper shoulder, lower torso, and both chest straps to provide maximum adjustability for all body shapes and side. The adjustment slide is firmly fixed by the center bar to one strap, while a connecting strap is passed through one side, over the center bar and through the second side. The proportions of the adjustment slide relative to the strap material are such that the connecting strap can be pulled with a firm force through the adjustment slide, but normal movements of the dog will not cause slipping. A "elongate linker" assembly's length may be any length may be any length depending on the overall size of the harness, but is generally from two to eight inches long.

Many kinds of releasable connectors are useable in this invention. For convenience, the term "buckle" is used, but any other releasable connector may be substituted without going outside the scope of the attached claims. Illustrated is the preferred buckle, a quick-release buckle, but a standard buckle, hooks or hook-and-loop fastener may also be used.

Any material may be used for the straps. Webbing is the preferred material because of its comfort and adjustability. It can easily be sewn to securely affix two parts and can be pulled through slide connectors with force and will remain in position. Webbing may be made of nylon, cotton or other materials. The end of a strap pulled through any connector should be turned to the outside of the harness to avoid rubbing on the skin or the dog.

There are many prior art harnesses. Those with the leash connector at the top of the shoulder or the back will transmit pressure to the center of the chest when the dog pulls, triggering the opposition reflex and inducing the dog to pull forward.

The invention is best illustrated by reference to the figures.

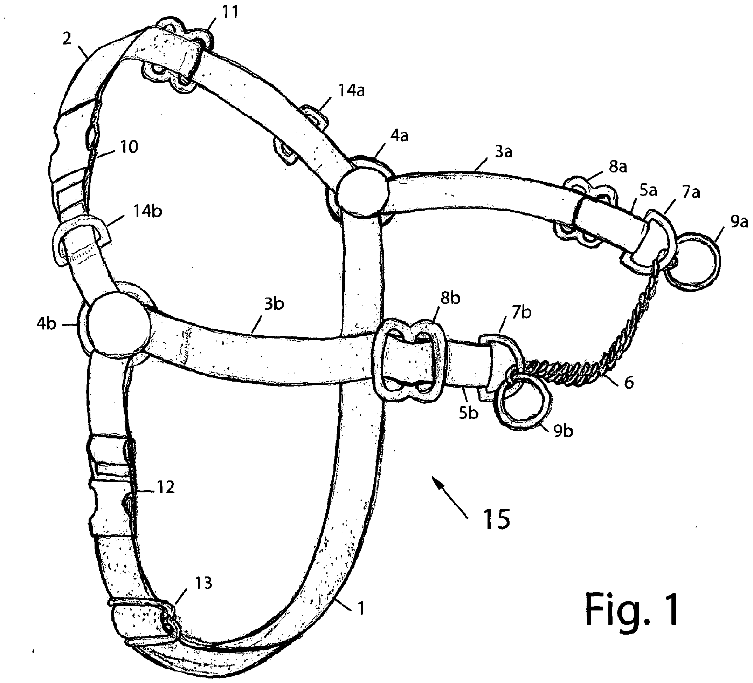

Figure 1, As shown the harness 15 generally includes an under torso strap 1, an over shoulder strap 2, and two chest straps 3a and 3b all attached at 90 degrees to each other through the first connectors 4a and 4b. Any connector suitable for the attachment of the three straps may be used. The far end of the chest straps 5a and 5b pass through the adjustment slides 8a and 8b then wrap through the apertures of the elongate linker 7a and 7b and are attached to the center bar of the adjustment slides. The linker 6 passes through each of the apertures 7a and 7b and the ends are attached to two circular ring connectors 9a and 9b, one forming the leash connection point and the other acting as a stopper. With two circular connection rings 9a and 9b the dog can be walked from either side by changing which ring is the connection and which ring is the stopper providing equal and opposite effect on the dog no matter which side the handler decides to walk the dog. A buckle 10 is attached to any point on the upper shoulder strap to allow the strap to be opened and an adjustment slide 11 is placed near the buckle 10. A second buckle 12 with adjustment slide13 may be placed on the lower torso strap 1 to allow the lower torso strap to be opened as well. If the second buckle 12 is not utilised an adjustment slide will be put close to one of the first connectors 4a or 4b to still allow adjustability in the lower torso strap 1. Attached just above the first connectors 4a and 4b on the upper shoulder strap 2 are two half-ring (D-ring) connectors 14a and 14b, used for close quarter walking or off leash training.

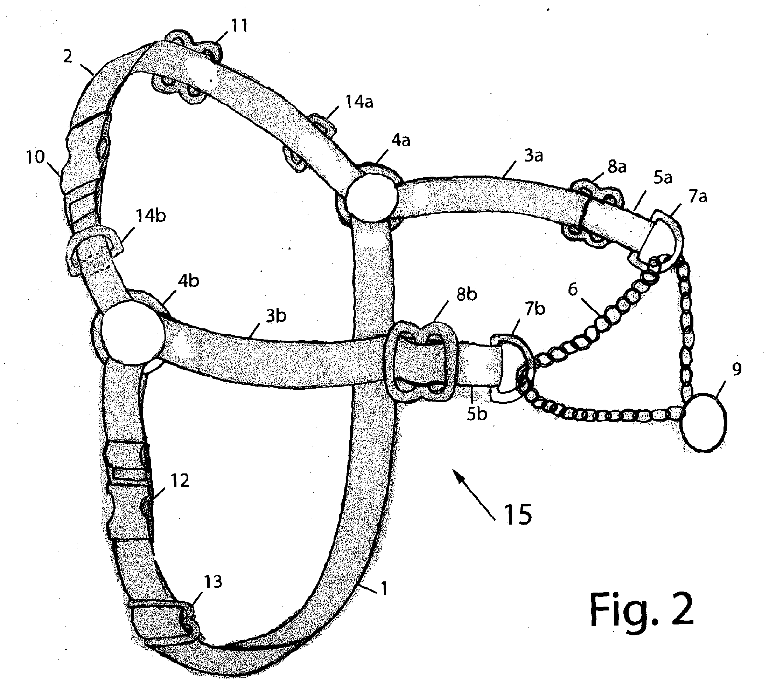

Figure 2, As shown the harness 15 generally includes an under torso strap 1, an over shoulder strap 2, and two chest straps 3a and 3b all attached at 90 degrees to each other through the first connectors 4a and 4b. Any connector suitable for the attachment of the three straps may be used. The far end of the chest straps 5a and 5b pass through the adjustment slides 8a and 8b then wrap through the apertures of the elongate linker 7a and 7b and are attached to the center bar of the adjustment slides. The linker 6 passes through each of the apertures 7a and 7b and the ends are attached to a single circular ring connector 9. With one circular connection ring the dog can be walked from either side providing equal and opposite effect on the dog no matter which side the handler decides to walk the dog. A buckle 10 is attached to any point on the upper shoulder strap to allow the strap to be opened and an adjustment slide 11 is placed near the buckle 10. A second buckle 12 with adjustment slide13 may be placed on the lower torso strap 1 to allow the lower torso strap to be opened as well. If the second buckle 12 is not utilised an adjustment slide will be put close to one of the first connectors 4a or 4b to still allow adjustability in the lower torso strap 1. Attached just above the first connectors 4a and 4b on the upper shoulder strap 2 are two half-ring (D-ring) connectors 14a and 14b, used for close quarter walking or off leash training.

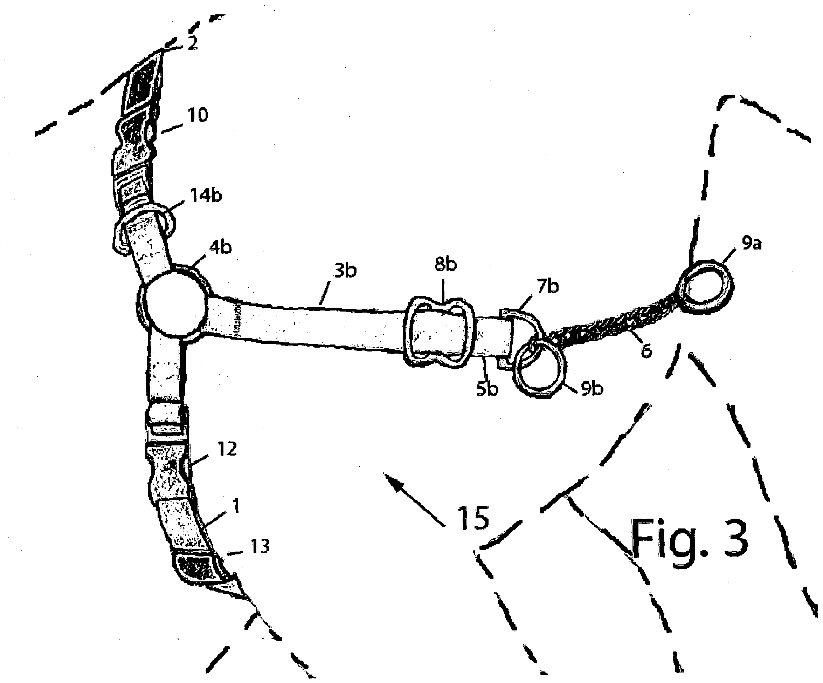

Figure 3, As shown the harness 15 on a dog with a view from the side to show proper fitting of the harness. The lower torso strap 1 and the upper shoulder strap 2 should form a circle with a slight deviation towards the chest strap 3b. The straps 1 and 2 should be adjusted to a comfortably snug fit. The chest strap 3b should be adjusted until it is horizontal or parallel to the ground and not pulling the torso-shoulder circle too far forward.

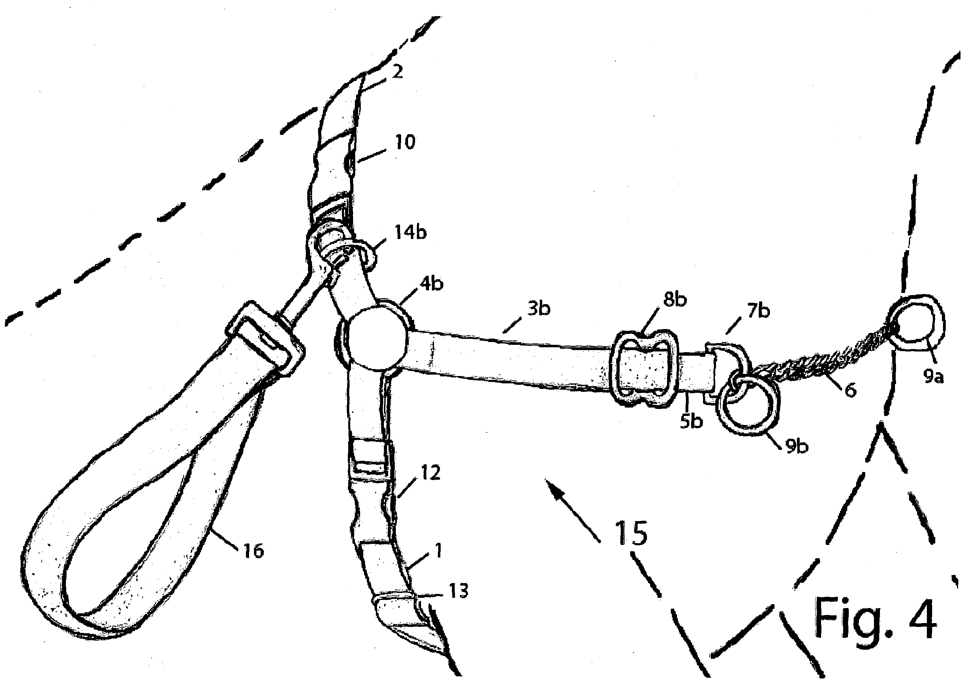

Figure 4, As shown the harness 15 on a dog with a view from the side to show the attachment of a short leash 16 to the D-ring 14b for the purpose of close quarter walking or utilizing steps to teaching off leash walking.

As made clear by the present example, the design of the harness 15 is such that there is no proportionally continuous tightening of the harness 15 with the continued movement of the animal and/or a continued pulling force applied to the leash connector 9a or 9b, beyond a girth substantially similar to the girth of the animal about which the harness 15 is placed. This feature thus prevents restriction of the girth of the animal. Preferably, after repeated use, an association is formed by the animal between the sound of the linker 6 moving through one of the apertures 7a or 7b, and the animal's failure to comply with a command by a trainer or an owner. The animal thus perceives the sound as negative, and will modify its behaviour to prevent the sound from being initiated. Such conditioned responses to an auditory cue may thus provide a behavioural change in the animal, which can be useful in training the animal. For example, if the animal is wearing the harness 15 and is walking on a leash at a pace which exceeds a pace set by a handler holding the leash, or if the animal fails to obey a 'stop' command, the sound of the linker 6 moving through one of the apertures 7a or 7b, will be initiated. The handler of the dog may provide verbal reprimands to the animal, which reinforce that the noise of the linker 6 moving through one of the apertures 7a or 7b is an indicator that the animal is not behaving in an appropriate manner, and that the sound is negative. As such, the animal may, for example, learn to slow a pace or cease movement altogether in response to a command, in order to prevent the sound of the linker 6 of the harness 15 moving.

Unlike harnesses with fixed leash connectors of the prior art, the non-restricting feature of the harness 15 allows for use of the harness in a training mode and a non-training mode. That is, the harness 15 can be worn by the animal when a handler is enforcing certain verbal or visual commands, but if such a training session is not occurring (i.e. the animal is merely being exercised, without coincidental training), the harness 15 can also be used during this non-training mode, as it will not restrict the animal's range of motion.

## Claims

1. A harness for placement around a girth of an animal, the harness including:
an upper shoulder strap (2), a lower torso strap (1) arranged to encircle the torso of the animal behind its front legs;
two chest straps (3a, 3b) each having an aperture (7a, 7b);
**characterised by** an elongate chain linker (6) arranged to pass through the apertures so as to extend across the forechest of the animal, the elongate chain linker having a connector (9) for connection to a leash; and arranged such that a pulling force on the leash directed away from the girth of the animal causes movement of the chain linker through at least one of the apertures creating a noise detectable by the animal to assist in the training of the animal.

2. A harness according to claim 1 wherein a pulling force on the leash directed away from the girth of the animal causes the chain linker to slide and tighten.

3. A harness according to claim 1 wherein the elongate chain linker terminates at each end with rings that act as connectors for connection to the leash.

4. The harness according to claim 1, wherein the girth of the dog is around the chest of the dog.

5. The harness according to claim 1 wherein the chain is a twist-link chain.

6. The harness according to any one of claims 1 to 5, wherein the linker is formed from a linker material that optimises the noise detectable by the animal to achieve an optimal training response in the animal.

7. The harness according to claim 1, wherein the shoulder strap and torso strap are attached to a first connector at about a 180° angle to form a shoulder-torso circle, and the chest strap is attached at the first connector at a 90° angle to the shoulder-torso circle.

8. The harness according to claim 1 comprising at least one adjustment means on each of the shoulder, torso and chest straps.

9. The harness according to claim 1 comprising at least one buckle on the shoulder and/or torso strap.

10. The harness according to claim 1, wherein two half-circle (D-ring) connectors are attached to the upper shoulder strap to provide a leash attachment for close quarter walking or utilizing steps to teaching off leash walking.

11. The harness according to any of the preceding claims, wherein the aperture of the harness is in the form of a ring.

12. The harness according to claim 11, wherein the ring is an O-ring.

13. The harness according to claim 11, wherein the ring is a D-ring.

14. The harness according to any claim 7-13, wherein the first connector of the harness is in the form of a ring, rectangle, or square.

## Patentansprüche

1. Ein Geschirr, das um den Torso des Tieres gelegt wird, wobei das Geschirr aus Folgendem besteht:
einem oberen Schulterriemen (2), einem unteren Körperriemen (1),
die so angeordnet sich, dass sie hinter den Vorderbeinen des Tieres um dem Körper führen;
zwei Brustriemen (3a, 3b), mit je einer Öffnung (7a, 7b),
die durch zwei verlängerte Kettenösen (6) charakterisiert sind,
die so angeordnet sind, dass sie durch
die Öffnungen reichen und über die vordere Brust des Tieres verlaufen. Die verlängerte Kette ist mit einer Verbindung (9) ausgestattet,
an der eine Leine befestigt werden kann, und so angebracht, dass eine
Zugkraft der Kette, die vom Leib des Tieres weggeleitet wird, die Bewegung der Kette durch mindestens eine der Ösen auslöst, was ein für das Tier wahrnehmbares Geräusch erzeugt und beim Training des Tieres hilft.

2. Ein Geschirr nach Anspruch 1, wonach die Zugkraft der Leine vom Leib des Tieres weg eine Bewegung und ein Zuziehen der Kette verursacht.

3. Ein Geschirr nach Anspruch 1, wonach die verlängerte Kette an jedem Ende mit Ringen endet, die als Verbinder dienen, um die Leine anzubringen.

4. Das Geschirr nach Anspruch 1, wonach der Gurt des Hundes um die Brust des Hundes führt.

5. Das Geschirr nach Anspruch 1, wobei es sich um eine Kette mit verdrehten Gliedern handelt.

6. Das Geschirr unter Anspruch 1 bis 5, wobei die Verbindung aus einem Material besteht, das das vom Tier wahrnehmbare Geräusch optimiert, damit eine optimale Trainingsreaktion im Tier erreicht wird.

7. Das Geschirr nach Anspruch 1, wobei der Schulterriemen und der Leibesriemen mit einem Winkel von etwa 180° befestigt an einem ersten Verbinder befestigt sind, um Schulter und Torso zu umkreisen, und der Brustriemen wird am ersten Verbinder in einem 90°-Winkel befestigt, um Schulter und Torso zu umkreisen.

8. Das Geschirr nach Anspruch 1, wobei an jedem Schulter-, Torso- und Brustriemen mindestens ein Mittel zur Größenverstellung vorhanden ist.

9. Das Geschirr aus Anspruch 1, die aus mindestens einer Schnalle am Schulter- und/oder Torso-Riemen besteht.

10. Das Geschirr aus Anspruch 1, wobei zwei halbkreisförmige (D-Ring) Verbinder am oberen Schulterriemen befestigt sind, damit eine Leine für Bei-Fuß-Gehen oder für Schritte zum Trainieren im Ohne-Leine-Laufen verwendet werden kann.

11. Das Geschirr in den obigen Ansprüchen, wobei die Öffnung des Geschirrs ringförmig ist.

12. Das Geschirr nach Anspruch 11, wobei es sich beim Ring um einen O-Ring handelt.

13. Das Geschirr nach Anspruch 11, wobei es sich beim Ring um einen D-Ring handelt.

14. Das Geschirr nach Ansprüchen 7 - 13,
wobei der erste Verbinder des
Geschirrs in Form eines Rings, Rechtecks oder Quadrats ist.

## Revendications

1. Harnais à placer autour d'un animal. Ce harnais comprend :
une sangle supérieure pour les épaules (2), une sangle inférieure pour le torse (1) placée de manière à encercler le torse
de l'animal derrière ses antérieurs ;
deux sangles pour le poitrail (3a, 3b), chacune avec une ouverture (7a, 7b) ;
**caractérisées par** un chaînon de liaison allongé (6) conçu pour passer par les
ouvertures de manière à se placer en travers du poitrail de l'animal, le chaînon de liaison allongé ayant un raccord (9) pour l'attacher à une laisse ; et conçu de manière à ce qu'un
mouvement de traction exercé sur la laisse dans la direction opposée au cou de l'animal fasse passer le chaînon de liaison à travers au moins une des ouvertures, créant un son reconnaissable par l'animal pour faciliter son éducation.

2. Harnais conforme à la revendication 1, pour lequel une traction exercée sur la laisse dans la direction opposée au cou de l'animal fait glisser et serre le chaînon de liaison.

3. Harnais conforme à la revendication 1, dont le chaînon de liaison allongé comporte à chaque extrémité un anneau qui sert de raccord pour y attacher la laisse.

4. Harnais conforme à la revendication 1, qui entoure le chien au niveau du poitrail.

5. Harnais conforme à la revendication 1, dont le chaînon est une chaîne à maillons torsadés.

6. Harnais conforme à l'une des revendications là 5, dont le chaînon de liaison est fabriqué dans un matériau pour chaîne qui renforce le son reconnaissable par l'animal afin d'optimiser la réponse de l'animal pendant l'éducation.

7. Harnais conforme à la revendication 1, dont la sangle d'épaules et la sangle de torse sont fixées à une première attache selon un angle de 180 °, formant ainsi un cercle épaules - torse, et dont la sangle de poitrail est fixée à cette première attache selon un angle de 90 ° par rapport au cercle épaules - torse.

8. Le harnais conforme à la revendication 1 comporte au moins un dispositif de réglage sur chaque épaule, sur le torse et sur les sangles de poitrail.

9. Le harnais conforme à la revendication 1 comporte au moins une boucle sur la sangle d'épaules et / ou de torse.

10. Le harnais conforme à la revendication 1 comporte deux attaches en demi-cercle (anneau en D) fixées à la sangle d'épaules supérieure pour pouvoir y raccorder la laisse pour pratiquer la marche au pied ou comme étape dans l'apprentissage de la marche sans laisse.

11. Harnais conforme à l'une quelconque des revendications sus-citées, dont l'ouverture a une forme circulaire.

12. Harnais conforme à la revendication 11, dont l'anneau est un anneau en forme de O

13. Harnais conforme à la revendication 11, dont l'anneau est un anneau en forme de D

14. Harnais conforme à l'une des revendications 7 à 13 dont la première attache est de forme circulaire, rectangulaire ou carré.
